# FASCICULE DE BREVET EUROPEEN

(11) **EP 2 858 764 B1**
(45) Date de publication et mention de la délivrance du brevet: **18.10.2017**
(21) Numéro de dépôt: 13729644.8
(22) Date de dépôt: 05.06.2013
(51) Int. Cl.: B07C 5/38

(54) **PROCÉDÉ DE PRÉPARATION DE COMMANDES LISTANT DES CHARGES UNITAIRES**
VERFAHREN ZUM ZUSAMMENSTELLEN VON BESTELLUNGEN AUS EINZELNEN ARTIKELN
PROCESS FOR PREPARING ORDERS OF INDIVIDUAL ITEMS

(30) Priorité: 06.06.2012 FR 1255259
(43) Date de publication de la demande: 15.04.2015
(73) Titulaire: Savoye, 21000 Dijon (FR)
(72) Inventeur: COLLIN, Jean-Michel, F-21190 Merceuil (FR)
(74) Mandataire: Vidon Brevets & Stratégie
(86) Numéro de dépôt international: PCT/EP2013/061627
(87) Numéro de publication internationale: WO 2013/182620

(56) Documents cités:
- EP-A1- 1 647 338
- EP-A2- 1 754 549
- DE-A1- 19 929 985
- US-A- 4 811 551

## Description

### 1. DOMAINE DE L'INVENTION

Le domaine de l'invention est celui de la logistique et, en particulier, celui de la préparation de commandes.

Plus précisément, l'invention concerne un procédé de préparation de commandes, notamment mais non exclusivement dans le cas où celui-ci est mis en oeuvre par un système de tri du type magasin de tri et stockage automatisé ou encore de type transbordement (ou « crossdocking » en anglais).

Plus généralement, elle peut s'appliquer dans tous les cas où les procédés de préparation de commandes sont ou pourraient être utilisés.

### 2. ARRIÈRE-PLAN TECHNOLOGIQUE

Il est connu, notamment dans des entreprises d'expédition et de vente à distance de produits de petit volume, de mettre en oeuvre des systèmes de préparation de colis. Par « colis », on entend un objet ou un ensemble matériel composé de plusieurs objets, quels qu'en soient le poids, les dimensions et le volume, constituant une charge unitaire, en raison de son conditionnement (bac, cage, caisse, carton, conteneur, fardeau, palette cerclée ou filmée etc.).

Les principaux exemples d'utilisateurs de ces systèmes automatisés, ou semi automatisés, de préparation de commandes sont les fournisseurs pour la grande distribution (produits frais et secs par exemple), les matériels de bureau, les vêtements, les produits cosmétiques, l'outillage ou les pièces détachées dans l'industrie mécanique. Ces systèmes permettent de préparer avec un minimum de main-d'oeuvre, dans un délai imparti, une unité d'expédition correspondant à une commande précise d'un client, la commande portant sur plusieurs colis (autrement appelés charges unitaires ou produits) en différentes quantités, chacun des colis avec sa quantité étant identifié par une ligne de commande.

Ces systèmes de préparation de commandes mettent en oeuvre généralement un système de tri comprenant par exemple un magasin de tri et stockage automatisé, ou une plateforme de préparation de commandes de type « cross docking ».

Le cross-docking est une opération qui permet de consolider les charges unitaires par commande à partir d'une plate-forme de tri, tel qu'un carrousel de tri. Cette technique permet d'effectuer une préparation de commande sans pour autant s'appuyer sur un entrepôt. Il n'est donc pas nécessaire de stocker les marchandises pour effectuer la préparation de commande, ou « picking », des charges unitaires commandées. Les charges unitaires livrées, par exemple par des véhicules de fournisseurs, sont déposées directement ou indirectement au niveau d'un système de tri pour être triées par commande. Ces charges unitaires peuvent ensuite être reprises à l'unité pour être reconditionnées.

Un inconvénient de la technique de cross docking est qu'elle s'avère, malgré son avantage en termes de réactivité et de coûts de stockage, relativement contraignante en terme de logistique, c'est-à-dire au niveau des moyens nécessaires au transport et à l'acheminement des flux de charges unitaires. En effet, les charges unitaires défilant à l'unité, cela nécessite des moyens de convoyage importants ce qui engendre un coût relativement élevé.

Un autre inconvénient est que la place au sol occupée par ces différents moyens mis en oeuvre s'avère relativement importante ce qui n'est pas non plus satisfaisant.

Encore autre inconvénient est que le temps de préparation d'une commande s'avère relativement important du fait du délai d'acheminement de chacune des charges unitaires jusqu'à sa destination (un poste de reconditionnement par exemple) et donc du flux généré.

Ces inconvénients existent également pour les systèmes de tri du type magasin de tri et stockage automatisé.

EP1647338A1 décrit un procédé d'exploitation d'un système de tri de produits (A,B,C) de telle manière que des regroupements individuels de différents produits en accord avec des commandes (I-VI) puissent être ainsi formés. Il s'agit d'un procédé selon le préambule de la revendication 1. Dans EP1647338A1, il n'y a pas de formation d'unités logistiques telles que définies dans la partie cacactérisante de la revendication 1, puisque les seules entités manipulées du début à la fin du process sont des charges unitaires appelées produits A,B,C. A fortiori, dans EP1647338A1, le dispositif de tri 4 ne trie pas des unités logistiques mais des charges unitaires appelées produits A,B,C.

### 3. OBJECTIFS DE L'INVENTION

L'invention, dans au moins un mode de réalisation, a notamment pour objectif de pallier au moins certains des inconvénients de l'art antérieur.

Plus précisément, dans au moins un mode de réalisation, un objectif de l'invention est de fournir un procédé de préparation de commandes permettant d'optimiser les flux logistiques afin de réduire la complexité d'un système de préparation de commande mettant en oeuvre ce procédé.

Un autre objectif d'au moins un mode de réalisation est de fournir un tel procédé de préparation de commandes qui permette de réduire le temps de préparation d'une commande.

Au moins un mode de réalisation a aussi pour objectif de fournir un tel procédé de préparation de commandes qui permette d'optimiser l'emprise au sol d'un système de préparation de commandes mettant en oeuvre un tel procédé.

Encore un autre objectif d'au moins un mode de réalisation de l'invention est de fournir un tel procédé qui soit simple à mettre en oeuvre et peu coûteux.

### 4. EXPOSÉ DE L'INVENTION

Dans un mode de réalisation particulier de l'invention, il est proposé un procédé selon la revendication 1.

Ainsi, l'invention propose une approche nouvelle et inventive de mise en oeuvre d'un procédé de préparation de commandes consistant à regrouper en unités logistiques une pluralité de charges unitaires (pouvant être ou non de même nature).

Un avantage d'un tel procédé est qu'il permet de réduire le temps de préparation d'une commande car les charges unitaires arrivent par « blocs », en unités logistiques, ce qui permet d'augmenter la cadence (les charges unitaires d'une commande donnée arrivent plus vite à destination que dans les solutions connues où les charges unitaires arrivent une à une).

Un autre avantage est que le regroupement des charges unitaires en unités logistiques permet de limiter l'encombrement du flux de charges unitaires, et donc nécessite des moyens ayant une emprise au sol moindre par rapport à l'art antérieur.

Encore un autre avantage, découlant de l'avantage précédent, est qu'un tel procédé de préparation de commandes peut être mis en oeuvre avec un système moins complexe, ce qui est donc moins coûteux par rapport à l'art antérieur.
Selon un mode de réalisation de l'invention, chaque commande comprend des lignes de commande indiquant chacune une référence de charge unitaire et une quantité de charges unitaires, et chaque unité logistique comprend la ou les charges unitaires d'une ligne de commande ou d'une portion de ligne de commande.

Ainsi, cela permet de limiter encore l'espace et le temps nécessaires à la préparation d'une commande et également de permettre un suivi simple de la commande.

Dans différents modes de réalisation, chaque unité logistique peut être manipulée, par le système de tri, en utilisant un support intermédiaire ou un moyen de solidarisation temporaire, ou directement par le système de tri sans moyen supplémentaire.

Cela permet ainsi de mettre en oeuvre le procédé de préparation de commandes selon l'invention en utilisant les moyens existants au niveau d'un système de tri, et ainsi de ne pas engendrer de coûts supplémentaires.

Au moins une desdites unités logistiques comprend au moins deux charges unitaires organisées en au moins une pile d'au moins deux charges unitaires et/ou au moins une couche d'au moins deux charges unitaires.

Chaque unité logistique peut également posséder une composition déterminée en fonction d'au moins un paramètre appartenant au groupe comprenant :
- les dimensions et/ou le poids des charges unitaires composant ladite unité logistique ;
- un paramètre de maintien vertical et/ou horizontal des charges unitaires composant ladite unité logistique ;
- les dimensions d'un support intermédiaire ou un moyen de solidarisation temporaire utilisé par le système de tri pour manipuler ladite unité logistique ;
- les dimensions maximales et/ou le poids maximal des éléments pouvant être manipulés par le système de tri.

Dans un mode de réalisation particulier, l'étape de formation d'unités logistiques est réalisée au moins en partie par un opérateur humain, en fonction d'informations envoyées par le système de pilotage.

L'étape de formation d'unités logistiques peut également être réalisée au moins en partie par un moyen mécanique, en fonction d'instructions envoyées par le système de pilotage.

Dans un mode de réalisation particulier, le système de tri appartient au groupe comprenant :
- une plate-forme de transbordement sans stockage ;
- un système de tri et de stockage automatisé.

Dans une variante, le procédé comprend une étape de reconditionnement des unités logistiques fournies par le système de tri pour chaque commande.

### 5. LISTE DES FIGURES

D'autres caractéristiques et avantages de l'invention apparaîtront à la lecture de la description suivante, donnée à titre de simple exemple indicatif et non limitatif, et des dessins annexés, parmi lesquels :
- la figure 1 présente un organigramme représentant les différentes étapes du procédé de préparation de commandes selon un mode de réalisation particulier de l'invention ;
- la figure 2 est une vue schématique d'un système de préparation de commandes mettant en oeuvre le procédé de préparation de commandes de la figure 1 ;
- la figure 3 est un tableau présentant différentes compositions possibles d'unités logistiques ; et
- la figure 4 présente un exemple de structure simplifiée du système de pilotage apparaissant sur la figure 2.

### 6. DESCRIPTION DÉTAILLÉE

Sur toutes les figures du présent document, les éléments identiques sont désignés par une même référence numérique.

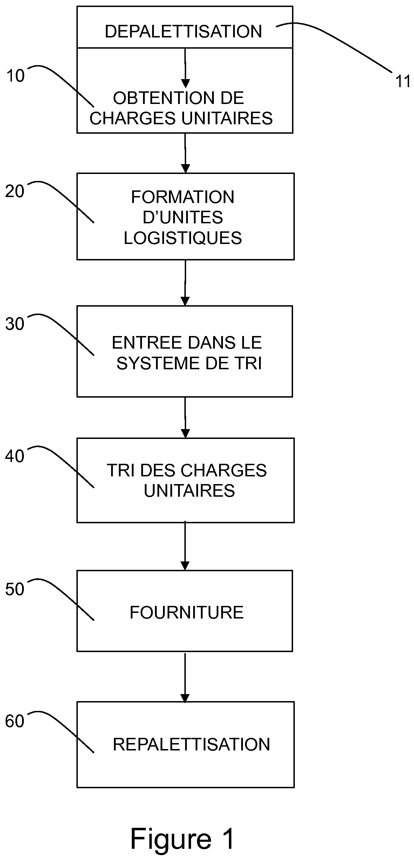

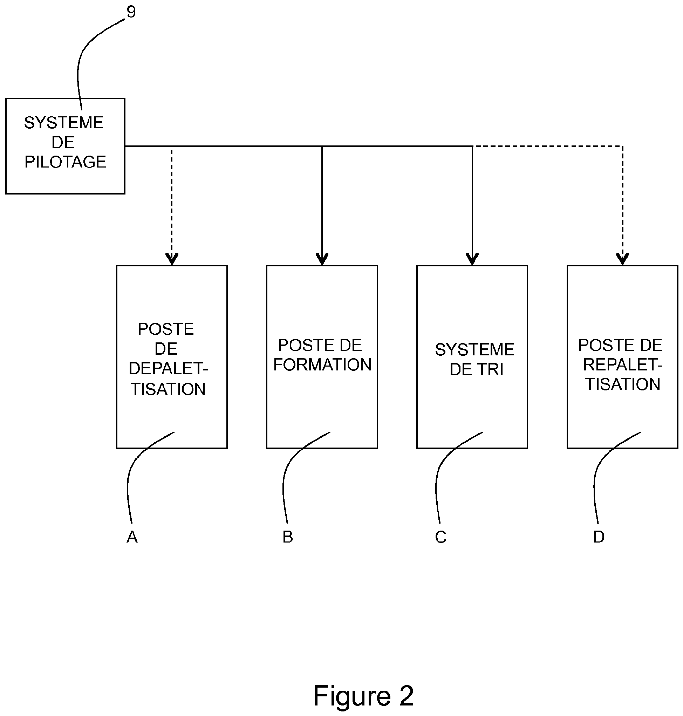

On présente par la suite, en relation avec **les** **figures 1** **et** **2****,** un mode de réalisation du procédé de préparation de commandes selon l'invention, ainsi qu'une vue schématique d'un système de préparation de commandes mettant en oeuvre le procédé de préparation de commandes selon le mode de réalisation de la figure 1. La commande comprend une pluralité de lignes de commande qui indiquent chacune une référence de charge unitaire ainsi que la quantité de charges unitaires souhaitées de chaque référence.

Comme illustré en figure 1, le procédé de préparation de commandes comprend d'abord une étape d'obtention 10 de charges unitaires. Cette étape d'obtention de charges comporte une première sous-étape de déconditionnement 11 d'unités de transports telles que des palettes ou des conteneurs. Dans ce mode de réalisation, cette étape de déconditionnement 11 est une étape de dépalettisation depuis un poste de dépalettisation A, par exemple de palettes déchargées depuis des transporteurs, sans stockage de masse. Cette étape de déconditionnement 11 peut être pilotée par un système de pilotage 9.

Bien évidemment, d'autres modes de réalisation peuvent être prévus, comme des étapes d'obtention n'incluant pas d'étape de déconditionnement 11 d'unités de transports (par exemple dans le cas d'une sortie d'un magasin de stockage ou d'une chaîne de fabrication).

A la suite de cette étape d'obtention de charges unitaires, le procédé comprend une étape 20 de formation d'unités logistiques au niveau d'un poste de formation d'unités logistiques B. Une unité logistique est une composition comprenant une ou plusieurs charges unitaires de même référence. Une unité logistique est une entité manipulable ensuite au niveau d'un système de tri C. Les unités logistiques vont être formées en fonction de la commande qu'elles concernent. Dans ce mode de réalisation, les unités logistiques comprennent chacune la ou les charges unitaires d'une ligne de commande ou d'une portion de ligne de commande. De cette manière, la quantité désirée d'une référence de charge unitaire (ou une portion de la quantité désirée, notamment lorsque la quantité désirée est trop importante pour qu'une seule unité logistique puisse la contenir) est contenue dans une unité logistique, ce qui permet de faciliter le suivi de la commande et également d'optimiser le flux et la préparation de la commande, en supprimant le délai d'acheminement des charges unitaires une à une.

Chaque unité logistique peut donc adopter différentes compositions suivant la ligne de commande ou la portion de ligne de commande qu'elle concerne, et donc la quantité de charges unitaires qui vont composer cette unité logistique :
- une composition comprenant une charge unitaire unique ;
- une composition comprenant au moins deux charges unitaires organisées en au moins une pile d'au moins deux charges unitaires et/ou au moins une couche d'au moins deux charges unitaires.

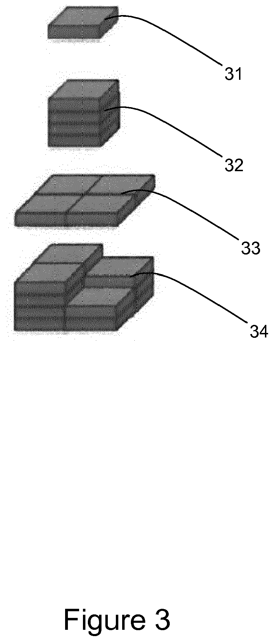

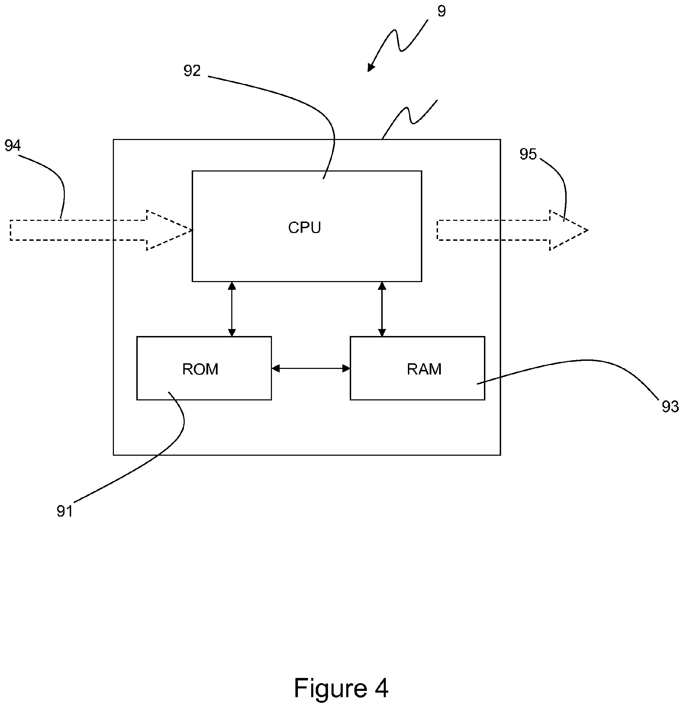

**La** **figure 3** illustre quatre compositions possibles d'unités logistiques. L'unité logistique référencée 31 est composée d'une seule charge unitaire. Une unité logistique référencée 32 est composée de quatre charges unitaires disposées en une pile. Deux autres compositions 33, 34 sont illustrées dans cette figure 4, ces compositions comprenant une ou plusieurs couches de charges unitaires. L'unité logistique référencée 33 est composée d'une couche de quatre charges unitaires tandis que l'unité logistique référencée 34 est composée de plusieurs couches constituées par des piles de charges unitaires juxtaposées.

La composition de chacune des unités logistiques (chaque unité logistique de la commande pouvant avoir une composition différente) va également dépendre, selon la situation, d'un ou plusieurs paramètres, parmi les suivants :
- les dimensions et/ou le poids des charges unitaires qui composent l'unité logistique ;
- un paramètre de maintien vertical et/ou horizontal des charges unitaires composant l'unité logistique ;
- les dimensions d'un support intermédiaire ou d'un moyen de solidarisation temporaire utilisé par le système de tri C pour manipuler l'unité logistique ;
- les dimensions maximales et/ou le poids maximal des éléments pouvant être manipulés par le système de tri C.

L'étape 20 de formation de ces unités logistiques peut être effectuée manuellement ou de façon semi automatique (voire même de façon entièrement automatique). En d'autres termes, l'étape de formation d'unités logistiques peut être réalisée au moins en partie par un opérateur humain ou au moins en partie par des moyens mécaniques, tel qu'un bras robotisé.

Cette étape 20 de formation d'unités logistiques est contrôlée par un système de pilotage 9 qui envoie, à un opérateur humain ou à des moyens mécaniques, des informations sur la configuration à adopter ou des instructions pour former l'unité logistique.

La **figure 4** présente la structure simplifiée d'un système de pilotage 9 selon un mode de réalisation particulier de l'invention. Ce système de pilotage comprend une mémoire RAM 93, une unité de traitement (CPU) 92, équipée par exemple d'un processeur, et pilotée par un programme d'ordinateur stocké dans une mémoire ROM 91. A l'initialisation, les instructions de code du programme d'ordinateur sont par exemple chargées dans la mémoire RAM 93 avant d'être exécutées par le processeur de l'unité de traitement 92, pour mettre en oeuvre l'envoi d'informations sur la composition des unités logistiques. L'unité de traitement 92 reçoit en entrée une ou plusieurs instructions 94 (informations concernant la ligne de commande, paramètres concernant les charges unitaires ou les unités logistiques, les dimensions d'un support intermédiaire ou un moyen de solidarisation temporaire utilisé par le système de tri pour manipuler ladite unité logistique, les dimensions maximales et/ou le poids maximal des éléments pouvant être manipulés par le système de tri). Le processeur de l'unité de traitement 92 traite la ou les instructions 94 et génère en sortie des informations 95 permettant à l'opérateur ou le moyen mécanique de composer une unité logistique.

Cette figure 4 illustre seulement une manière particulière, parmi plusieurs possibles, de réaliser la technique de l'invention, dans l'un quelconque de ses modes de réalisation. En effet, le système de pilotage se réalise indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où le système de pilotage est réalisé avec une machine de calcul reprogrammable, le programme correspondant (c'est-à-dire la séquence d'instructions) peut être stocké dans un médium de stockage amovible (tel que par exemple une carte mémoire, un CD-ROM ou un DVD-ROM) ou non, ce médium de stockage étant lisible partiellement ou totalement par un ordinateur ou un processeur.

Comme illustré en figures 1 et 2, les charges unitaires combinées en unités logistiques arrivent ensuite au niveau du système de tri C lors d'une étape 30. Cette étape 30 d'entrée des charges unitaires dans le système de tri C se fait également sous le contrôle du système de pilotage 9. De manière classique, ce système de tri C est, selon différents modes de réalisation, une plateforme de transbordement, ou « cross docking », ou un système de tri et stockage automatisé.

Vient ensuite une étape 40 de tri des charges unitaires, par le système de tri C, en fonction des commandes et sous le contrôle du système de pilotage 9. Ce système de tri C manipule les unités logistiques directement ou indirectement, selon les modes de réalisation. En d'autres termes, le système de tri C manipule, selon un premier mode de réalisation, chacune des unités logistiques formées par l'intermédiaire d'un support intermédiaire (comme un plateau) ou d'un moyen de solidarisation (telle qu'une pince). Selon un deuxième mode de réalisation, chaque unité logistique est manipulée directement par le système de tri C, sans qu'aucun moyen supplémentaire n'intervienne.

Le système de tri C fournit ensuite, lors d'une étape 50 de fourniture, les charges unitaires listées dans la liste de commande, sous forme d'unités logistiques, afin de finaliser la préparation de commande.

Dans ce mode de réalisation, le procédé comprend en outre une étape 60 de reconditionnement des unités logistiques fournies par le système de tri C, sous forme de repalettisation au niveau d'un poste de repalettisation D. Cette étape de reconditionnement peut être pilotée également par le système de pilotage 9.

Bien évidemment, d'autres modes de réalisation sont envisageables, dans lesquels l'étape de reconditionnement 60 se ferait sous d'autres formes, telle que la mise en carton ou la mise en conteneur. On peut également imaginer un mode de réalisation ne comportant pas d'étape de reconditionnement.

## Revendications

1. Procédé de préparation de commandes listant chacune des charges unitaires, du type comprenant les étapes suivantes :
- obtention (10) de charges unitaires ;
- entrée (30) des charges unitaires dans un système de tri (C), sous le contrôle d'un système de pilotage (9) ;
- tri (40) des charges unitaires par le système de tri (C), en fonction des commandes et sous le contrôle du système de pilotage (9);
- pour chaque commande, fourniture (50), par le système de tri (C), des charges unitaires listées dans ladite commande ;
**caractérisé en ce que** l'étape d'obtention (10) de charges unitaires est suivie d'une étape (20) de formation d'unités logistiques en fonction des commandes et sous le contrôle du système de pilotage (9), au moins une desdites unités logistiques comprenant plusieurs charges unitaires,
et **en ce que** les étapes d'entrée (30), de tri (40) et de fourniture (50) sont effectuées en manipulant les unités logistiques obtenues.

2. Procédé selon la revendication 1, **caractérisé en ce que** chaque commande comprend des lignes de commande indiquant chacune une référence de charge unitaire et une quantité de charges unitaires,
et **en ce que** chaque unité logistique comprend la ou les charges unitaires d'une ligne de commande ou d'une portion de ligne de commande.

3. Procédé selon l'une quelconque des revendications 1 et 2, **caractérisé en ce que** chaque unité logistique est manipulée, par le système de tri (C), en utilisant un support intermédiaire ou un moyen de solidarisation temporaire.

4. Procédé selon l'une quelconque des revendications 1 et 2, **caractérisé en ce que** chaque unité logistique est manipulée directement par le système de tri (C), sans moyen supplémentaire.

5. Procédé selon l'une quelconque des revendications 1 à 4, **caractérisé en ce qu'**au moins une desdites unités logistiques comprend au moins deux charges unitaires organisées en au moins une pile d'au moins deux charges unitaires et/ou au moins une couche d'au moins deux charges unitaires.

6. Procédé selon l'une quelconque des revendications 1 à 5, **caractérisé en ce que** chaque unité logistique possède une composition déterminée en fonction d'au moins un paramètre appartenant au groupe comprenant :
- les dimensions et/ou le poids des charges unitaires composant ladite unité logistique ;
- un paramètre de maintien vertical et/ou horizontal des charges unitaires composant ladite unité logistique ;
- les dimensions d'un support intermédiaire ou un moyen de solidarisation temporaire utilisé par le système de tri (C) pour manipuler ladite unité logistique ;
- les dimensions maximales et/ou le poids maximal des éléments pouvant être manipulés par le système de tri (C).

7. Procédé selon l'une quelconque des revendications 1 à 6, **caractérisé en ce que** l'étape de formation (20) d'unités logistiques est réalisée au moins en partie par un opérateur humain, en fonction d'informations envoyées par le système de pilotage (9).

8. Procédé selon l'une quelconque des revendications 1 à 6, **caractérisé en ce que** l'étape de formation (20) d'unités logistiques est réalisée au moins en partie par un moyen mécanique, en fonction d'instructions envoyées par le système de pilotage (9).

9. Procédé selon l'une quelconque des revendications 1 à 8, **caractérisé en ce que** le système de tri (C) appartient au groupe comprenant :
- une plate-forme de transbordement sans stockage ;
- un système de tri et de stockage automatisé.

10. Procédé selon l'une quelconque des revendications 1 à 9, **caractérisé en ce que** l'étape d'obtention (10) de charges unitaires comprend une étape de déconditionnement (11) d'au moins une unité de transport.

11. Procédé selon l'une quelconque des revendications 1 à 10, **caractérisé en ce qu'**il comprend une étape de reconditionnement (60) des unités logistiques fournies par le système de tri (C) pour chaque commande.

## Patentansprüche

1. Verfahren zum Zusammenstellen von Bestellungen, wobei jeder der einzelnen Artikel aufgelistet wird, vom Typ umfassend die folgenden Schritte:
- Erhalten (10) von einzelnen Artikeln;
- Eingeben (30) der einzelnen Artikel in ein Sortiersystem (C) unter der Kontrolle eines Steuersystems (9);
- Sortieren (40) der einzelnen Artikel durch das Sortiersystem (C) in Abhängigkeit der Bestellungen und unter der Kontrolle des Steuersystems (9);
- für jede Bestellung, Liefern (50), durch das Sortiersystem (C), der einzelnen Artikel, die in der Bestellung aufgelistet sind;
**dadurch gekennzeichnet, dass** der Schritt des Erhaltens (10) von einzelnen Artikeln von einem Schritt (20) des Bildens logistischer Einheiten in Abhängigkeit von den Bestellungen und unter der Kontrolle des Steuersystems (9) gefolgt wird, wobei mindestens eine der logistischen Einheiten mehrere einzelne Artikel umfasst,
und dadurch, dass die Schritte des Eingebens (30), des Sortierens (40) und des Lieferns (50) durchgeführt werden, indem die erhaltenen logistischen Einheiten manipuliert werden.

2. Verfahren nach Anspruch 1,
**dadurch gekennzeichnet, dass** jede Bestellung Befehlszeilen umfasst, die jeweils eine Referenz eines einzelnen Artikels und eine Menge einzelner Artikel anzeigen,
und dadurch, dass jede logistische Einheit den oder die einzelnen Artikel einer Befehlszeile oder eines Abschnitts der Befehlszeile umfasst.

3. Verfahren nach einem der Ansprüche 1 und 2,
**dadurch gekennzeichnet, dass** jede logistische Einheit durch das Sortiersystem (C) unter Verwendung eines Zwischenträgers oder mittels einer vorübergehenden Verbindung manipuliert wird.

4. Verfahren nach einem der Ansprüche 1 und 2,
**dadurch gekennzeichnet, dass** jede logistische Einheit direkt durch das Sortiersystem (C) ohne ergänzendes Mittel manipuliert wird.

5. Verfahren nach einem der Ansprüche 1 bis 4,
**dadurch gekennzeichnet, dass** mindestens eine der logistischen Einheiten mindestens zwei einzelne Artikel umfasst, die in mindestens einem Stapel von mindestens zwei einzelnen Artikeln und/oder mindestens einer Schicht von mindestens zwei einzelnen Artikeln organisiert werden.

6. Verfahren nach einem der Ansprüche 1 bis 5,
**dadurch gekennzeichnet, dass** jede logistische Einheit eine Zusammensetzung besitzt, die in Abhängigkeit von mindestens einem Parameter bestimmt wird, der zur Gruppe gehört umfassend:
- die Abmessungen und/oder das Gewicht der einzelnen Artikel, welche die logistische Einheit zusammensetzen;
- einen Parameter des vertikalen und/oder horizontalen Halts der einzelnen Artikel, welche die logistische Einheit zusammensetzen;
- die Abmessungen eines Zwischenträgers oder eines vorübergehenden Verbindungsmittels, die von dem Sortiersystem (C) verwendet werden, um die logistische Einheit zu manipulieren;
- die maximalen Abmessungen und/oder das maximale Gewicht der Elemente, die von dem Sortiersystem (C) manipuliert werden können.

7. Verfahren nach einem der Ansprüche 1 bis 6,
**dadurch gekennzeichnet, dass** der Schritt des Bildens (20) logistischer Einheiten mindestens teilweise von einem menschlichen Bediener durchgeführt wird, in Abhängigkeit von Informationen, die von dem Steuersystem (9) gesendet werden.

8. Verfahren nach einem der Ansprüche 1 bis 6,
**dadurch gekennzeichnet, dass** der Schritt des Bildens (20) logistischer Einheiten mindestens teilweise von einem mechanischen Mittel durchgeführt wird, in Abhängigkeit von Instruktionen, die von dem Steuersystem (9) gesendet werden.

9. Verfahren nach einem der Ansprüche 1 bis 8,
**dadurch gekennzeichnet, dass** das Sortiersystem (C) zur Gruppe gehört umfassend:
- eine Cross Docking-Plattform ohne Lagerung;
- ein automatisiertes Sortier- und Lagersystem.

10. Verfahren nach einem der Ansprüche 1 bis 9,
**dadurch gekennzeichnet, dass** der Schritt des Erhaltens (10) von einzelnen Artikeln einen Schritt des Umpackens (11) mindestens einer Transporteinheit umfasst.

11. Verfahren nach einem der Ansprüche 1 bis 10,
**dadurch gekennzeichnet, dass** dieses einen Schritt des Umpackens (60) der logistischen Einheiten umfasst, die von dem Sortiersystem (C) für jede Bestellung geliefert werden.

## Claims

1. Method for preparing orders, each listing unit loads, said method of the type comprising the following steps:
- obtaining (10) unit loads;
- inputting (30) unit loads into a sorting system (C) under the control of a management system (9);
- sorting (40) the unit loads by the sorting system (C) according to the orders and under the control of the management system (9);
- for each order, providing (50) by means of the sorting system (C) unit loads listed in the said order;
**characterised in that** the said step (10) of obtaining unit loads is followed by a step (20) of forming logistical units according to the orders and under the control of the management system (9), at least one of the said logistical units comprising multiple unit loads, and **in that** the inputting step (30), sorting step (40) and providing step (50) are carried out by handling the logistical units that are obtained.

2. Method according to Claim 1, **characterised in that** each order comprises order lines each specifying a unit load reference and a quantity of unit loads, and **in that** each logistical unit comprises the unit load or loads of an order line or a portion of an order line.

3. Method according to either one of Claims 1 and 2, **characterised in that** each logistical unit is handled by the sorting system (C) by using an intermediate support or a temporary fixing means.

4. Method according to either one of Claims 1 and 2, **characterised in that** each logistical unit is handled directly by the sorting system (C) without additional means.

5. Method according to any one of Claims 1 to 4, **characterised in that** at least one of the said logistical units comprises at least two unit loads organised in at least one stack of at least two unit loads and/or at least one layer of at least two unit loads.

6. Method according to any one of Claims 1 to 5, **characterised in that** each unit load has a composition determined according to at least one parameter belonging to the group comprising:
- the dimensions and/or the weight of the unit loads comprising the said logistical unit;
- a vertical and/or horizontal holding parameter of the unit loads comprising the said logistical unit;
- the dimensions of an intermediate support or a temporary consolidation means used by the sorting system (C) in order to handle the said logistical unit;
- the maximum dimensions and/or the maximum weight of the elements that are able to be handled by the sorting system (C).

7. Method according to any one of Claims 1 to 6, **characterised in that** the logistical units formation step (20) is realised at least in part by a human operator, according to information sent by the management system (9).

8. Method according to any one of Claims 1 to 6, **characterised in that** the logistical units formation step (20) is realised at least in part by a mechanical means, according to instructions sent by the management system (9).

9. Method according to any one of Claims 1 to 8, **characterised in that** the sorting system (C) belongs to the group comprising:
- a trans-shipment platform without storage;
- an automated sorting and storage system.

10. Method according to any one of Claims 1 to 9, **characterised in that** the step (10) of obtaining unit loads comprises a step (11) of unpacking at least one transporting unit.

11. Method according to any one of Claims 1 to 10, **characterised in that** it comprises a step (60) of repacking the logistical units provided by the sorting systems (C) for each order.
